# EUROPÄISCHE PATENTSCHRIFT

(11) **EP 2 733 474 B1**
(45) Veröffentlichungstag und Bekanntmachung des Hinweises auf die Patenterteilung: **01.08.2018**
(21) Anmeldenummer: 13192270.0
(22) Anmeldetag: 11.11.2013
(51) Int. Cl.: G01L 1/24, G01M 5/00, G01P 15/093

(54) **Dehnungsmessstreifen und mechanische Komponente**
Strain gauge strip and mechanical component
Extensomètre et composants mécaniques

(30) Priorität: 19.11.2012 DE 102012221067
(43) Veröffentlichungstag der Anmeldung: 21.05.2014
(73) Patentinhaber: Fraunhofer Gesellschaft zur Förderung der angewandten Forschung e.V., 80686 München (DE); Dimension-Polyant GmbH, 47906 Kempen (DE)
(72) Erfinder: Schade, Wolfgang, 38644 Goslar (DE); Schillings, Heiner, 52525 Heinsberg (DE)
(74) Vertreter: Friese Goeden Patentanwälte PartGmbB

(56) Entgegenhaltungen:
- WO-A1-99/61875
- WO-A2-2005/111677
- CN-U- 201 903 554
- DE-T2- 69 513 281
- FR-A1- 2 953 943
- US-A1- 2012 116 598
- YOJI OKABE ET AL: "Detection of transverse cracks in CFRP composites using embedded fiber Bragg grating sensors; Detection of transverse cracks in CFRP using FBG sensors", SMART MATERIALS AND STRUCTURES, IOP PUBLISHING LTD., BRISTOL, GB, Bd. 9, Nr. 6, 1. Dezember 2000 (2000-12-01), Seiten 832-838, XP020071423, ISSN: 0964-1726, DOI: 10.1088/0964-1726/9/6/313

## Beschreibung

Die Erfindung betrifft einen Dehnungsmessstreifen mit zumindest einem Trägermaterial und zumindest einem faseroptischen Sensor, enthaltend zumindest einen Lichtwellenleiter mit zumindest einem Faser-Bragg-Gitter. Weiterhin betrifft die Erfindung eine mechanische Komponente mit einem solchen Dehnungsmessstreifen und ein Verfahren zur Herstellung des Dehnungsmessstreifens.

Aus der Praxis ist bekannt, auf ein Bauteil einwirkende Kräfte aus der Messung der Verformung des Bauteils zu bestimmen. Hierzu können beispielsweise resistive Dehnungsmessstreifen verwendet werden, welche auf das Bauteil aufgeklebt werden und bei Verformung ihren elektrischen Widerstand verändern.

Aus der DE 10 2010 001 197 A1 ist weiterhin ein faseroptischer Sensor bekannt. Dieser enthält zumindest einen Lichtwellenleiter, welcher zumindest ein Faser-Bragg-Gitter enthält. Das Faser-Bragg-Gitter ist dazu eingerichtet, einen vorgebbaren Anteil eintreffenden Lichtes zu reflektieren und einen anderen Teil zu transmittieren. Die Wellenlänge des reflektierten bzw. transmittierten Anteils hängt von der Gitterkonstanten des Faser-Bragg-Gitters ab, welche wiederum bei der Herstellung des Faser-Bragg-Gitters festgelegt wird und danach aufgrund von Temperaturänderungen oder einwirkender mechanischer Spannung variiert. Diese Variation kann messtechnisch erfasst werden, beispielsweise durch ein Spektrometer.

Aus der DE 10 2008 027931 A1 ist bekannt, einen solchen faseroptischen Sensor in ein Kunststoffmaterial einzubetten.

Der den faseroptischen Sensor bildende Lichtwellenleiter kann beispielsweise durch Kleben oder Einlaminieren mit einer mechanischen Komponente verbunden werden. Eine Mehrzahl von faseroptischen Sensoren kann durch an sich bekannte optische Steckverbinder miteinander oder mit optischen Geräten zur Signalauslese und -erzeugung verbunden werden. Auf diese Weise kann ein Sensornetzwerk gebildet werden, welches eine Vielzahl von Messstellen umfassen kann.

Nachteilig an diesem bekannten faseroptischen Sensor ist jedoch, dass der Lichtwellenleiter aufgrund seines dünnen Querschnittes mechanisch empfindlich ist. Dies erschwert die Handhabung, da der Sensor leicht zerstört werden kann. Weiterhin kann der Lichtwellenleiter bei der Klebung bzw. beim Einlaminieren in ein Kunststoffbauteil leicht verrutschen, so dass dieser die Kräfte nicht mit der geforderten Genauigkeit oder an falschen Orten bestimmt. Darüber hinaus kann die Kopplung durch Faserstecker fehleranfällig sein oder sogar die Integration in das zu überwachende Bauteil verhindern.

Aus der DE 695 13 281 T1 und der FR 2 953 943 A1 sind Dehnungsmesstreifen bekannt, mit denen die Temperatur und die Dehnung gemessen werden können. Sie beschreiben allerdings nicht die Messung einer Beschleunigung.

Ausgehend von diesem Stand der Technik liegt der Erfindung somit die Aufgabe zugrunde, eine Vorrichtung anzugeben, mit welcher die auf mechanische Komponenten einwirkende Beschleunigung einfacher und/oder mit größerer Genauigkeit bestimmt werden können.

Die Erfindung wird durch einen Dehnungsmessstreifen gemäß Anspruch 1, ein Verfahren gemäß Anspruch 13 und eine mechanische Komponente gemäß Anspruch 12 gelöst.

Erfindungsgemäß wird vorgeschlagen, einen Dehnungsmessstreifen mit zumindest einem Trägermaterial und zumindest einem faseroptischen Sensor zu verwenden. Der faseroptische Sensor enthält zumindest einen Lichtwellenleiter mit einem einzelnen Faser-Bragg-Gitter.

Der Lichtwellenleiter enthält einen Kern und einen den Kern in etwa konzentrisch umgebenden Mantel. Der Brechungsindex des Kernes ist geringfügig kleiner gewählt als der Brechungsindex des Mantels, so dass in den Kern eingekoppeltes Licht durch Totalreflexion an der Grenzfläche zwischen Kern und Mantel innerhalb des Kernes geführt wird. Optional kann der Mantel von einer weiteren Umhüllung umgeben sein, welche die mechanische Festigkeit des Lichtwellenleiters erhöht und/oder das Eindringen von Streulicht vermindert. Der Lichtwellenleiter kann aus Glas oder einem Polymer bestehen bzw. ein Glas oder ein Polymer enthalten. Zur Einstellung der Brechungsindizes von Kern und Mantel auf vorgebbare Werte kann der Lichtwellenleiter darüber hinaus zumindest einen Dotierstoff enthalten. Die Grenzfläche zwischen Kern und Mantel kann geometrisch definiert, d.h. scharf ausgeformt sein. In diesem Fall ist der Lichtwellenleiter eine Step-Index-Faser. In anderen Ausführungsformen der Erfindung kann durch allmähliche Angleichung des Brechungsindex zwischen Kern und Mantel der Brechungsindex kontinuierlich zwischen Kern und Mantel variieren. Der Lichtwellenleiter kann als Monomode-Faser ausgebildet sein, so dass nur eine einzige Mode im Kern ausbreitungsfähig ist. In anderen Ausführungsformen der Erfindung kann der Lichtwellenleiter auch als Multimode-Faser ausgebildet sein und eine Mehrzahl von Lichtmoden im Kern führen.

An einer vorgebbaren Stelle im Lichtwellenleiter ist ein Faser-Bragg-Gitter angeordnet. Ein Faser-Bragg-gitter kann beispielsweise durch Materialmodifikation des Kernes mit Femtosekunden-Laserpulsen in den Lichtwellenleiter eingebracht sein. In anderen Ausführungsformen der Erfindung kann ein Faser-Bragg-Gitter auch durch UV-Laser-Interferenz-Belichtung erzeugt werden. In jedem Fall ändert sich der Brechungsindex des Materials des Kerns unter Einwirkung der optischen Strahlung, so dass an der Grenzfläche zum unbehandelten Material ein Teil der Strahlung reflektiert und ein Teil transmittiert wird. Eine Mehrzahl solcher Bereiche mit vorgebbarem Abstand erzeugt ein Faser-Bragg-Gitter mit vorgebbarer Gitterkonstante. Somit definieren der Ort eines Faser-Bragg-Gitters innerhalb des Lichtwellenleiters und die Lage des Lichtwellenleiters auf der mechanischen Komponente den jeweiligen Messort an der mechanischen Komponente.

Erfindungsgemäß wird nun vorgeschlagen, den faseroptischen Sensor auf ein Trägermaterial aufzubringen. Das Trägermaterial kann ein Polymer enthalten oder daraus bestehen. Auf diese Weise wird die Handhabung des Dehnungsmessstreifens erheblich vereinfacht, da der faseroptische Sensor nun mit dem Trägermaterial auf eine zu überwachende mechanische Komponente aufgeklebt oder in eine mechanische Komponente einlaminiert werden kann. Aufgrund der größeren Abmessungen und der größeren mechanischen Steifigkeit des Trägermaterials kann die Handhabung soweit verbessert sein, dass der Dehnungsmessstreifen schneller und damit kostengünstiger auf der mechanischen Komponente angebracht werden kann oder der Dehnungsmessstreifen mit größerer Genauigkeit positioniert werden kann, so dass sich Messwerte mit größerer Zuverlässigkeit ergeben. Der Sensor kann mit dem Trägermaterial aufgerollt werden, so dass Transport und Lagerhaltung vereinfacht sind.

In einigen Ausführungsformen der Erfindung kann das Trägermaterial Polyethylen und/oder Polypropylen und/oder Acrylnitril-Butadien-Styrol und/oder Polyimid enthalten oder daraus bestehen. Diese Trägermaterialien können einerseits kostengünstig hergestellt werden und ermöglichen andererseits eine einfache Weiterverarbeitung durch Laminieren oder Kleben mit gängigen duroplastischen Harzen, wie beispielsweise Epoxidharz und/oder Phenolharz und/oder Polyesterharz.

In einigen Ausführungsformen der Erfindung kann das Trägermaterial eine Dicke von etwa 5 µm bis etwa 250 µm aufweisen. In anderen Ausführungsformen der Erfindung kann das Trägermaterial eine Dicke von etwa 50 µm bis etwa 125 µm aufweisen. Ein solches Trägermaterial erlaubt die einfache Verarbeitung sowohl bei der Herstellung des Dehnungsmessstreifens als auch beim Anbringen des Dehnungsmessstreifens im oder an der zu überwachenden mechanischen Komponente.

In einigen Ausführungsformen der Erfindung kann das Trägermaterial aus zumindest einer ersten Lage und zumindest einer zweiten Lage zusammengesetzt sein, wobei der faseroptische Sensor zwischen der ersten Lage und der zweiten Lage angeordnet ist. Auf diese Weise ist der faseroptische Sensor bei Anordnung auf einer mechanischen Komponente allseits vor Beschädigung geschützt, so dass die Zuverlässigkeit der Messwerterfassung ansteigen kann.

In einigen Ausführungsformen der Erfindung kann das Trägermaterial weiterhin zumindest ein Verstärkungselement enthalten. Das Verstärkungselement kann dazu eingerichtet sein, den Elastizitätsmodul des Trägermaterials an einen vorgebbaren Wert anzupassen. Da auch der Lichtwellenleiter mit dem Trägermaterial festhaftend verbunden ist, ändert sich damit indirekt auch der Elastizitätsmodul des Lichtwellenleiters, so dass der Messbereich des Dehnungsmessstreifens an die im Betrieb bzw. bei Belastung der mechanischen Komponente zu erwartenden Verformungen angepasst werden kann. Hierdurch können mit identischen faseroptischen Sensoren unterschiedliche Dehnungsmessstreifen realisiert werden, welche unterschiedliche Messbereiche abdecken. Somit können gleiche oder ähnliche optische Komponenten zur Signalerzeugung und -auslese verwendet werden, obgleich die jeweils verwendeten Dehnungsmessstreifen unterschiedliche Messbereiche abdecken.

In einigen Ausführungsformen der Erfindung kann das Verstärkungselement in einer Lage des Trägermaterials angeordnet sein. Hierdurch bestimmt bei der Herstellung des Dehnungsmessstreifens die Art des verwendeten Trägermaterials gleichzeitig die Art bzw. den Messbereich des verwendeten Dehnungsmessstreifens. So kann ein Trägermaterial mit vielen bzw. besonders steifen Verstärkungselementen einen Dehnungsmessstreifen für große Kräfte zur Verfügung stellen und ein Trägermaterial mit einer geringeren Anzahl von Verstärkungselementen kann für Dehnungsmessstreifen verwendet werden, welche den niedrigen Kraftbereich abdecken.

In einigen Ausführungsformen der Erfindung kann das Verstärkungselement zwischen der ersten Lage und der zweiten Lage des Trägermaterials angeordnet sein. Auf diese Weise kann das oder die Versteifungselement(e) zusammen mit dem faseroptischen Sensor in das Trägermaterial eingebracht werden, so dass die Anpassung an unterschiedliche Messbereiche nur durch Anzahl, Querschnitt und/oder räumliche Orientierung der Verstärkungselemente auf dem Trägermaterial an vorgebbare Werte angepasst werden kann.

In einigen Ausführungsformen der Erfindung kann die Längserstreckung des Verstärkungselementes in etwa parallel zur Längserstreckung des Lichtwellenleiters verlaufen.

In einigen Ausführungsformen der Erfindung kann das Verstärkungselement Kohlefasern und/oder Aramidfasern enthalten oder daraus bestehen. Diese Fasersysteme sind dazu geeignet, hohe Zugkräfte aufzunehmen. Darüber hinaus zeichnen sich Kohlefasern durch hohe UV-Beständigkeit aus, so dass eine vorzeitige Alterung des Dehnungsmessstreifens vermieden werden kann.

In einigen Ausführungsformen der Erfindung können die erste Lage und die zweite Lage des Trägermaterials durch Aufschmelzen und/oder Nassverklebung und/oder Heißlaminierung miteinander verbunden sein. Hierdurch kann der vorgeschlagene Dehnungsmessstreifen besonders einfach hergestellt werden. Beim Aufschmelzen werden zwei oder mehrere Lagen des Trägermaterials unter Druck und Wärmeeinwirkung miteinander verbunden. Bei der Nassverklebung werden Trägermaterialien hergestellt, indem zunächst ein Klebstoff auf zumindest eine Lage des Trägermaterials zumindest einseitig aufgebracht und danach die einzelnen Lagen unter Druck miteinander verbunden werden. Bei der Heißlaminierung wird eine vorbeschichtete Lage erwärmt, wodurch der zuvor aufgetragene Haftvermittler aktiviert wird, so dass er seine Verbundkraft entwickeln kann. Das vollflächige und blasenfreie Verpressen der ersten Lage und der zweiten Lage des Trägermaterials kann in einigen Ausführungsformen der Erfindung durch eine Walzstraße oder durch Vakuumpressen erfolgen, d.h. das zu verbindende Trägermaterial befindet sich in einem Vakuum, so dass der Umgebungsdruck eine Presskraft auf die Lagen ausübt.

In einigen Ausführungsformen der Erfindung kann das Trägermaterial aus mehr als zwei Lagen zusammengesetzt sein. In einigen Ausführungsformen der Erfindung kann das Trägermaterial aus etwa 3 bis etwa 10 Einzellagen laminiert sein, so dass faseroptische Sensoren und/oder Verstärkungselemente in unterschiedlichen Ebenen angeordnet sein können. Dadurch können die faseroptischen Sensoren an die auftretenden Belastungen und/oder die zu erfassenden Messwerte angepasst werden.

In einigen Ausführungsformen der Erfindung kann der Dehnungsmessstreifen eine Länge zwischen etwa 2 m und etwa 100 m oder eine Länge zwischen etwa 10 m und etwa 70 m aufweisen. Dehnungsmessstreifen dieser Art können dazu eingerichtet sein, entlang der Längserstreckung von mechanischen Komponenten eingesetzt zu werden, um die entlang der mechanischen Komponente auftretenden statischen oder dynamischen Kräfte und/oder Verformungen und/oder Temperaturschwankungen zu erfassen. Die mechanischen Komponenten können in diesem Fall Durchlaufträger oder Säulen von Bauwerken sein, Tragflächen von Flugzeugen, Masten von Booten oder Rotorblätter von Windenergieanlagen oder Luftschrauben oder Energiekabel. In einigen Ausführungsformen der Erfindung kann diese in Verbindung mit technischen Textilien eingesetzt werden, beispielsweise Laminatsegeltücher, um an diesen dreidimensionale Formmessungen durchzuführen.

In einigen Ausführungsformen der Erfindung kann der Dehnungsmessstreifen eine Breite von etwa 5 mm bis etwa 100 mm aufweisen. Dieser Bereich hat sich als gut handhabbar erwiesen und ist hinreichend, um Verstärkungselemente und faseroptische Sensoren in hinreichender Anzahl in den Dehnungsmessstreifen einzubetten.

In einigen Ausführungsformen der Erfindung kann der vorgeschlagene Dehnungsmessstreifen einen oder mehrere zusätzliche faseroptische Sensoren enthalten. In einigen Ausführungsformen der Erfindung können etwa zwei bis etwa zehn faseroptische Sensoren im Dehnungsmessstreifen angeordnet sein. Hierdurch können unterschiedliche Messorte, unterschiedliche Messbereiche oder unterschiedliche Messgrößen unabhängig voneinander erfasst werden. Da einzelne Faser-Bragg-Gitter aufgrund ihrer Wellenlänge und des Wellenleiters diskriminiert werden können, kann eine größere Anzahl von Messstellen realisiert werden, ohne dass die Anforderungen an das zur Auslese verwendete Spektrometer steigen. In Abhängigkeit der Anzahl der gewünschten Messorte und der Länge des zusätzlichen Lichtwellenleiters kann die Anzahl der Faser-Bragg-Gitter in einem Wellenleiter 1 bis etwa 100 betragen. In anderen Ausführungsformen der Erfindung kann die Anzahl der Faser-Bragg-Gitter etwa 10 bis etwa 40 betragen. In wiederum anderen Ausführungsformen der Erfindung kann die Anzahl der Faser-Bragg-Gitter etwa 20 und etwa 120 betragen. Eine Mehrzahl von Messorten kann entweder dadurch bereitgestellt werden, dass mehrere Faser-Bragg-Gitter in einem Lichtwellenleiter angeordnet sind und/oder dass eine Mehrzahl von Lichtwellenleitern mit zugeordneten Faser-Bragg-Gittern auf der mechanischen Komponente bzw. dem Trägermaterial aufgebracht sind. Der erfindungsgemäße Dehnungsmessstreifen weist eine Messmasse auf, welche auf einer Oberfläche des Trägermaterials befestigt ist. Dies kann durch Kleben, Verschweißen oder nieten erfolgen. Die von der Messmasse auf den Dehnungsmessstreifen ausgeübte Kraft wird dazu verwendet, eine Beschleunigung zu erfassen.

In einigen Ausführungsformen der Erfindung kann der Dehnungsmessstreifen eine Klebeschicht enthalten, mit welcher der Dehnungsmessstreifen auf einer mechanischen Komponente fixierbar ist. In einigen Ausführungsformen der Erfindung kann die Klebeschicht wiederverwendbar sein, so dass der Dehnungsmessstreifen universell an unterschiedliche mechanische Komponenten angeklebt werden kann, ähnlich wie ein Haftetikett. In anderen Ausführungsformen der Erfindung kann die Klebeschicht zur einmaligen Verwendung vorgesehen sein, d.h. die Klebkraft steigt nach dem Aufkleben zunächst weiter an, so dass ein dauerhafter Verbund zwischen Dehnungsmessstreifen und mechanischer Komponente entsteht. In einigen Ausführungsformen der Erfindung kann die Klebeschicht einen heißaktivierbaren Klebstoff enthalten, welcher beispielsweise durch Aufbügeln oder Heißluft aktiviert wird, so dass die Lage des Dehnungsmessstreifens nach dem Auflegen auf die mechanische Komponente noch korrigiert werden kann, ehe eine endgültige Fixierung erfolgt.

Nachfolgend soll die Erfindung anhand von Figuren ohne Beschränkung des allgemeinen Erfindungsgedankens näher erläutert werden. Dabei zeigt:
Figur 1 einen Dehnungsmessstreifen in der Aufsicht.
Figur 2 zeigt ein Ausführungsbeispiel des erfindungsgemäßen Dehnungsmessstreifens in der Aufsicht.
Figur 3 zeigt einen ersten beispielhaften Querschnitt durch einen Dehnungsmessstreifen gemäß der Erfindung.
Figur 4 zeigt einen zweiten beispielhaften Querschnitt durch einen Dehnungsmessstreifen gemäß der Erfindung.
Figur 5 zeigt die beispielhafte Verwendung eines erfindungsgemäßen Dehnungsmessstreifens anhand einer mechanischen Komponente.

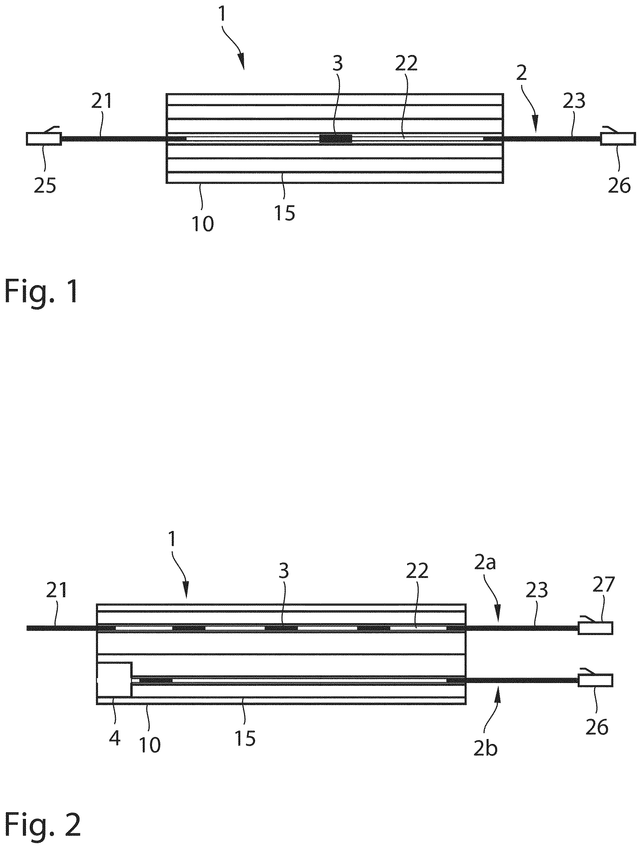

Figur 1 zeigt die Aufsicht auf einen Dehnungsmessstreifen. Der Dehnungsmessstreifen 1 enthält ein Trägermaterial 10, welches ein Polymer enthält oder daraus besteht. In das Trägermaterial sind Verstärkungselemente 15 eingelegt, welche die Verformung des Trägermaterials kontrollieren. Insbesondere wird durch die Verstärkungselemente 15 der Widerstand kontrolliert, welchen das Trägermaterial 10 einer Streckung in Längsrichtung entgegensetzt. In anderen Ausführungsformen können die Verstärkungselemente 15 selbstverständlich auch anders verlegt sein, beispielsweise eine Komponente in Querrichtung, um auch in einer Richtung orthogonal zur Längserstreckung des Dehnungsmessstreifens 1 eine Versteifung des Trägermaterials zu bewirken. Figur 1 zeigt sechs Verstärkungselementen 15. Selbstverständlich können auch mehr oder weniger Verstärkungselemente im Trägermaterial 10 vorhanden sein.

Weiterhin ist mit dem Trägermaterial 10 ein faseroptischer Sensor 2 verbunden. Auf diese Weise kann der faseroptische Sensor 2 einfach mit einer mechanischen Komponente verbunden werden, indem das Trägermaterial 10 in oder auf der mechanischen Komponente eingebaut wird. Hierzu kann das Trägermaterial 10 mit der mechanischen Komponente verklebt oder einlaminiert werden. Die Verklebung kann mit ablösbaren oder dauerhaften Klebstoffen erfolgen, beispielsweise Epoxidharzen.

Der faseroptische Sensor 2 weist einen Lichtwellenleiter auf, welcher hier drei Längsabschnitte aufweist. Der erste Längsabschnitt 21 erstreckt sich von einem Faserstecker 25 bis zum Beginn des Trägermaterials. Der zweite Längsabschnitt 22 ist im Trägermaterial 10 des Dehnungsmessstreifens 1 eingebettet und der optionale dritte Längsabschnitt 23 erstreckt sich vom Trägermaterial 10 zu einem zweiten Faserstecker 26. Durch die beidseitige Ausgestaltung mit Fasersteckern 25 und 26 kann der Dehnungsmessstreifen mit weiteren, ähnlichen Dehnungsmessstreifen kaskadiert werden, so dass sich ein größeres Sensornetzwerk ergibt.

Im zweiten Längsabschnitt 22 des faseroptischen Sensors 2 ist zumindest ein Faser-Bragg-Gitter 3 angeordnet. Das Faser-Bragg-Gitter reflektiert einen Teil eintreffenden Lichtes und transmittiert den verbleibenden Anteil. Die Wellenlänge des reflektierten Anteils bestimmt sich aus der Gitterkonstanten des Faser-Bragg-Gitters, welche sich wiederum in Abhängigkeit der mechanischen Verformung und der Temperatur des faseroptischen Sensors 2 verändern kann. Auf diese Weise kann durch Analyse des reflektierten und/oder transmittierten Lichtes auf die Verformung am Ort des Faser-Bragg-Gitters geschlossen werden. Aus der Verformung kann wiederum die einwirkende Kraft bestimmt werden.

Es ist hervorzuheben, dass die dargestellte Ausführungsform mit einem einzigen Faser-Bragg-Gitter 3 lediglich beispielhaft zu sehen ist. Durch Wellenlängenmultiplex können unterschiedliche Faser-Bragg-Gitter anhand ihrer Gitterkonstanten unterschieden werden, so dass eine Mehrzahl von Faser-Bragg-Gittern in einem einzigen Lichtwellenleiter angeordnet sein kann. Auf diese Weise kann ein einzelner Dehnungsmessstreifen 1 mit einem faseroptischen Sensor eine Mehrzahl von Messstellen realisieren. Der Dehnungsmessstreifen 1 kann hierzu eine Länge von etwa 1 m bis etwa 100 m oder in anderen Ausführungsformen eine Länge von etwa 5 m bis etwa 70 m aufweisen.

Figur 2 zeigt eine Ausführungsform der Erfindung. Gleiche Teile sind mit gleichen Bezugszeichen versehen, so dass sich die nachfolgende Beschreibung auf die wesentlichen Unterschiede beschränkt.

Auch der Dehnungsmessstreifen 1 gemäß Figur 2 weist ein Trägermaterial 10 auf. Im Trägermaterial 10 sind Verstärkungselemente 15 eingebracht, welche beispielsweise aus Glasfasern, Kohlefasern und/oder Aramidfasern bestehen können. Dies erlaubt eine einfache Einbettung in das Trägermaterial 10, eine hohe Zugfestigkeit und eine hinreichende Flexibilität des so verstärkten Trägermaterials 10, so dass dieses an die Kontur einer mechanischen Komponente angepasst werden kann. In einigen Ausführungsformen der Erfindung kann der faseroptische Sensor (2) direkt in eine Kohlefaser oder Aramidfaser (15) eingebracht sein, so dass beide Komponenten in das Trägermaterial (10) einlaminiert werden können.

Figur 2 erläutert, wie eine Mehrzahl von faseroptischen Sensoren 2a und 2b im Trägermaterial 10 angeordnet werden kann. Selbstverständlich ist auch dies nur beispielhaft zu sehen. In anderen Ausführungsformen der Erfindung können auch weitere faseroptische Sensoren im Trägermaterial 10 eingebettet sein, so dass die Anzahl zwischen 2 und etwa 10 liegen kann.

Der erste faseroptische Sensor 2a weist drei Längsabschnitte 21, 22 und 23 auf, wie vorstehend beschrieben. Im Längsabschnitt 22 sind im dargestellten Ausführungsbeispiel drei Faser-Bragg-Gitter angeordnet, welche somit eine Verformung an drei Orten unabhängig voneinander messen können. In einigen Ausführungsformen der Erfindung kann die Anzahl der Faser-Bragg-Gitter 1 bis etwa 100 betragen. In wiederum anderen Ausführungsformen der Erfindung kann die Anzahl der Faser-Bragg-Gitter zwischen etwa 5 und etwa 40 variieren. Die an unterschiedlichen Orten angeordneten Faser-Bragg-Gitter können dazu eingerichtet sein, unterschiedliche Messgrößen zu erfassen. So kann aus der Verformung der mechanischen Komponente beispielsweise auf die einwirkende Kraft geschlossen werden. In anderen Dehnungsmessstreifen kann jedoch auch ein Temperaturanstieg oder eine mechanische Schwingung zur Verformung eines Faser-Bragg-Gitters führen, so dass an unterschiedlichen Orten Kraft, Temperatur oder Schwingung gemessen werden kann.

Der zweite faseroptische Sensor 2b gemäß Figur 2 ist zur Messung einer Beschleunigung ausgebildet. Hierzu weist der faseroptische Sensor 2b ein einzelnes Faser-Bragg-Gitter 3 auf. Weiterhin ist die Trägerfolie 10 im Bereich des faseroptischen Sensors 2b bzw. in der Nähe des Faser-Bragg-Gitters 3 mit einer Masse 4 versehen. Die Masse 4 ist dazu eingerichtet, bei Beschleunigung eine Kraft auf das Trägermaterial 10 auszuüben. Diese Kraft führt zur Verformung des Faser-Bragg-Gitters 3, welche optisch erfasst werden kann. Nach Kalibrierung des Dehnungsmessstreifens 1 kann somit aus der Verformung des Faser-Bragg-Gitters auf die auf die Masse 4 einwirkende Kraft geschlossen werden, so dass die Beschleunigung bestimmt werden kann. Hiermit können insbesondere Schwingungsvorgänge präzise vermessen werden oder über die Messung der Zentripetalkraft kann eine Erfassung einer Rotationsgeschwindigkeit ermöglicht werden.

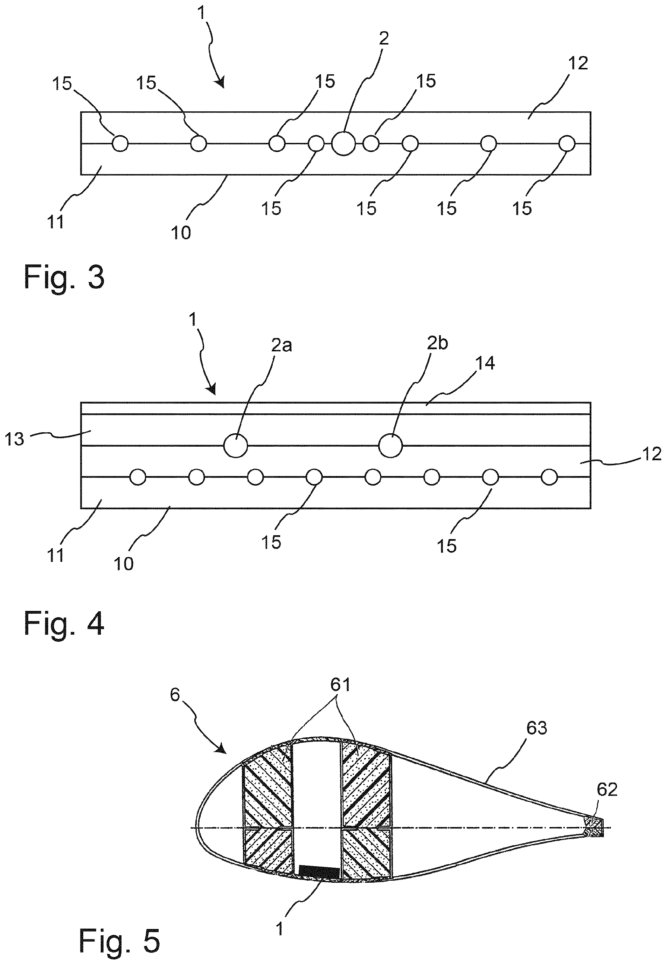

Figur 3 zeigt einen Querschnitt durch einen Dehnungsmessstreifen 1 gemäß der vorliegenden Erfindung. In der Ausführungsform gemäß Figur 3 ist das Trägermaterial 10 aus einer ersten Lage 11 und einer zweiten Lage 12 zusammengesetzt. An der Grenzfläche zwischen der ersten Lage 11 und der zweiten Lage 12 sind Verstärkungselemente 15 angeordnet. Im dargestellten Ausführungsbeispiel sind acht Verstärkungselemente 15 dargestellt, welche so im Querschnitt des Trägermaterials 10 verteilt sind, dass sich das gewünschte Dehnungsverhalten bei Krafteinwirkung ergibt. Das Dehnungsverhalten kann sowohl über die Anzahl der Verstärkungselemente 15 als auch über deren Querschnitt und/oder deren Materialzusammensetzung so eingestellt werden, dass der faseroptische Sensor 2 die gewünschte Verformung erfährt. Somit können unterschiedliche Messbereiche durch unterschiedlich verstärkte Trägermaterialien abgedeckt werden.

Bei der Herstellung des Dehnungsmessstreifens gemäß Figur 3 wird die erste Folienlage 11 an ihrer Oberfläche mit den Verstärkungselementen 15 und dem zumindest einen faseroptischen Sensor 2 versehen. Daraufhin wird die zweite Lage 2 aufgelegt und beide Lagen werden vollflächig miteinander laminiert. Dies kann beispielsweise durch Heißlaminierung, Aufschmelzen oder Nassverklebung erfolgen. Zum Verpressen der ersten Lage 11 und der zweiten Lage 12 kann eine Walzenstraße verwendet werden oder eine Vakuumpresse, so dass nach dem Laminieren beide Lagen vollflächig und blasenfrei miteinander verbunden sind.

Figur 4 zeigt eine weitere Ausführungsform des erfindungsgemäßen Dehnungsmessstreifens 1 im Querschnitt. Wie Figur 4 erläutert, muss das Trägermaterial 10 nicht zwingend aus genau zwei Lagen bestehen. Im Ausführungsbeispiel der Figur 4 ist eine erste Lage 11, eine zweite Lage 12 und eine dritte Lage 13 gezeigt. In gleicher Weise können weitere Lagen laminiert werden, so dass die Anzahl von 2 bis etwa 10 reichen kann.

Im dargestellten Ausführungsbeispiel sind acht Verstärkungselemente 15 zwischen der ersten Lage 11 und der zweiten Lage 12 einlaminiert, wie vorstehend beschrieben. Zwei faseroptische Sensoren 2a und 2b sind an der Grenzfläche zwischen der zweiten Lage 12 und der dritten Lage 13 einlaminiert. Selbstverständlich können auch an dieser zweiten Grenzfläche weitere Verstärkungselemente 15 angeordnet sein oder an der Grenzfläche zwischen der ersten Lage 11 und der zweiten Lage 12 können faseroptische Sensoren eingebettet sein. Die Figuren erläutern insoweit lediglich ein Prinzip, ohne eine Beschränkung auf die genaue Anzahl der dargestellten Elemente zu lehren.

Figur 4 zeigt weiterhin, wie die Oberfläche der dritten Lage 13 mit einer Klebeschicht 14 versehen werden kann. Die Klebeschicht 14 kann das Aufkleben, Ablösen und erneute Aufkleben des Dehnungsmessstreifens 1 auf eine mechanische Komponente ermöglichen. In anderen Ausführungsformen der Erfindung kann die Klebeschicht 14 ein heißaktivierbarer Klebstoff sein, welcher nach genauer Positionierung auf der mechanischen Komponente durch Wärme aktiviert wird, so dass eine dauerhafte Verklebung ausgelöst wird.

In einigen Ausführungsformen der Erfindung kann die Klebeschicht 14 bis zur endgültigen Verwendung des Dehnungsmessstreifens 1 mit einer Folie abgedeckt und so vor Verschmutzung geschützt werden. In diesem Fall hat der Benutzer die Schutzfolie vor der Positionierung des Dehnungsmessstreifens 1 auf der mechanischen Komponente zu entfernen.

Figur 5 zeigt ein Anwendungsbeispiel der vorliegenden Erfindung. Dargestellt ist der Querschnitt durch ein Rotorblatt einer Windenergieanlage als Beispiel einer mechanischen Komponente 6. In anderen Ausführungsformen der Erfindung können selbstverständlich andere mechanische Komponenten verwendet werden, beispielsweise Karosserieteile, Durchlaufträger, Säulen, Fachwerkträger, Tragflächen, Rumpfstrukturen oder ein anderes, im Bauwesen oder im Maschinenbau gängiges Bauteil.

Das Rotorblatt gemäß Figur 5 weist eine Außenhülle 63 auf, welche beispielsweise aus glasfaserverstärktem Kunststoff und/oder kohlefaserverstärktem Kunststoff laminiert werden kann. Im inneren Querschnitt befinden sich optionale Verstärkungselemente 61 und 62, welche den Querschnitt stabilisieren und dafür Sorge tragen, dass das Rotorblatt die geforderte Festigkeit aufweist.

Im Betrieb der Windenergieanlage wirken Kräfte auf das Rotorblatt ein, so dass dieses zu mechanischen Schwingungen angeregt werden kann, eine Kreisbeschleunigung erfährt und entlang seiner Längserstreckung mit Zugkräften beaufschlagt wird. Gleichzeitig ist die Außenhülle 63 einer UV-Strahlung ausgesetzt, welche zur Materialermüdung beitragen kann.

Zur Überwachung des Rotorblattes und/oder zur Regelung der Betriebsparameter der Windenergieanlage kann ein erfindungsgemäßer Dehnungsmessstreifen 1 eingesetzt werden, welcher an einer Stelle der Außenhülle 63 einlaminiert sein kann. In anderen Ausführungsformen der Erfindung kann der Dehnungsmessstreifen 1 durch eine Klebeschicht auf die Innenseite der Außenwandung 63 aufgeklebt sein. Der Dehnungsmessstreifen 1 kann aufgrund seiner Vielzahl von Messstellen und der möglichen Ortsauflösung dazu eingesetzt werden, Zugkräfte, Schwingungsverhalten und Beschleunigungen unabhängig voneinander zu erfassen, so dass eine engmaschige Überwachung der mechanischen Struktur der Komponente 6 ermöglicht wird. Aufgrund der Verbindung des faseroptischen Sensors mit dem Trägermaterial weist der Sensor eine verbesserte mechanische Stabilität auf, so dass eine einfachere Handhabung bei der Montage im Rotorblatt gegeben ist.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Beschreibung oder die Ansprüche 'erste' und 'zweite' Merkmale definieren, so dient dies der Unterscheidung gleichartiger Merkmale ohne eine Rangfolge festzulegen.

## Patentansprüche

1. Dehnungsmessstreifen (1) mit zumindest einem Trägermaterial (10) und zumindest einem faseroptischen Sensor (2b), enthaltend zumindest einen Lichtwellenleiter mit einem einzelnen Faser-Bragg-Gitter (3), wobei das Trägermaterial (10) ein Polymer enthält oder daraus besteht, wobei das Trägermaterial (10) weiterhin zumindest ein Verstärkungselement (15) enthält, **dadurch gekennzeichnet, dass** weiterhin eine Messmasse (4) in der Nähe des Faser-Bragg-Gitters (3) vorhanden ist, welche auf einer Oberfläche des Trägermaterials (10) befestigt ist, so dass diese bei Beschleunigung eine Kraft auf das Trägermaterial (10) ausübt, welche zur Verformung des Faser-Bragg-Gitters (3) führt.

2. Dehnungsmessstreifen nach Anspruch 1, **dadurch gekennzeichnet, dass** das Trägermaterial (10) zumindest eine erste Lage (11) und zumindest eine zweite Lage (12) enthält und der faseroptische Sensor (2) zwischen der ersten Lage (11) und der zweiten Lage (12) angeordnet ist.

3. Dehnungsmessstreifen nach Anspruch 1 oder 2, **dadurch gekennzeichnet, dass** die erste Lage (11) und die zweite Lage (12) des Trägermaterials (10) durch Aufschmelzen und/oder Nassverklebung und/oder Heißlaminierung miteinander verbunden sind.

4. Dehnungsmessstreifen nach einem der Ansprüche 2 oder 3, **dadurch gekennzeichnet, dass** das Verstärkungselement (15) zwischen der ersten Lage (11) und der zweiten Lage (12) des Trägermaterials (10) angeordnet ist.

5. Dehnungsmessstreifen nach einem der Ansprüche 1 bis 4, **dadurch gekennzeichnet**, das das Verstärkungselement (15) Kohlefasern und/oder Aramidfasern und/oder Glasfasern enthält oder daraus besteht.

6. Dehnungsmessstreifen nach einem der Ansprüche 1 bis 5, **dadurch gekennzeichnet, dass** das Verstärkungselement (15) parallel zum Lichtwellenleiter verläuft.

7. Dehnungsmessstreifen nach einem der Ansprüche 1 bis 6, **dadurch gekennzeichnet, dass** dieser eine Länge zwischen etwa 2 m und etwa 100 m oder eine Länge zwischen etwa 10 m und etwa 70 m und/oder eine Breite von etwa 5 mm bis etwa 100 mm aufweist.

8. Dehnungsmessstreifen nach einem der Ansprüche 1 bis 7, **dadurch gekennzeichnet, dass** dieser einen oder mehrere zusätzliche faseroptischer Sensoren (2a, 2b) enthält und/oder dass dieser 2 bis 10 faseroptische Sensoren (2a, 2b) enthält.

9. Dehnungsmessstreifen nach einem der Ansprüche 1 bis 8, **dadurch gekennzeichnet, dass** das Trägermaterial Polyethylen und/oder Polypropylen und/oder Acrylnitril-Butadien-Styrol und/oder Polyimid enthält oder daraus besteht.

10. Dehnungsmessstreifen nach Anspruch 8 oder Anspruch 9, wenn von Anspruch 8 abhängig, **dadurch gekennzeichnet, dass** dieser zwischen 20 und 120 Faser-Bragg-Gitter (3) enthält.

11. Dehnungsmessstreifen nach einem der Ansprüche 1 bis 10, **dadurch gekennzeichnet, dass** dieser weiterhin eine Klebeschicht (14) enthält, mit welcher der Dehnungsmessstreifen (1) auf einer mechanischen Komponente (6) fixierbar ist.

12. Mechanischen Komponente (6) mit einem Dehnungsmessstreifen (1) nach einem der Ansprüche 1 bis 11.

13. Verfahren zur Herstellung eines Dehnungsmessstreifens (1), bei welchem zumindest ein Lichtwellenleiter mit einem einzelnen Faser-Bragg-Gitter (3) versehen wird, und nachfolgend der Lichtwellenleiter sowie zumindest ein Verstärkungselement (15) zwischen eine erste Lage (11) und einer zweiten Lage (12) eines Trägermaterials (10) eingelegt wird, wobei die erste Lage (11) und die zweite Lage (12) nachfolgend durch Wärmezufuhr unter Anlegen eines Vakuums laminiert werden und weiterhin eine Messmasse (4) in der Nähe des Faser-Bragg-Gitters (3) auf einer Oberfläche des Trägermaterials (10) aufgebracht wird, so dass diese bei Beschleunigung eine Kraft auf das Trägermaterial (10) ausübt, welche zur Verformung des Faser-Bragg-Gitters (3) führt.

14. Verfahren nach Anspruch 13, **dadurch gekennzeichnet, dass** das Laminieren bei einer Temperatur zwischen 80°C und 150°C erfolgt.

15. Verfahren nach einem der Ansprüche 13 oder 14, **dadurch gekennzeichnet, dass** zumindest ein Faser-Bragg-Gitter (3) durch Punkt-zu-Punkt-Belichten mit Laserstrahlung oder durch UV-Laser-Interferenzbelichtung im Lichtwellenleiter erzeugt wird.

## Claims

1. Strain gage (1) with at least one base material (10) and at least one fiber-optic sensor (2b), containing at least one optical waveguide with an individual fiber Bragg grating (3), wherein the base material (10) contains or consists of a polymer, and the base material (10) additionally contains at least one reinforcing element (15), **characterized in that** a measurement mass (4) is additionally available in the vicinity of the fiber Bragg grating (3), which is mounted on a surface of the base material (10), such that it exerts a force on the base material (10) during acceleration, said force causing the fiber Bragg grating (3) to deform.

2. Strain gage according to claim 1, **characterized in that** the base material (10) contains at least a first layer (11) and at least one second layer (12) and the fiber-optic sensor (2) is arranged between the first layer (11) and the second layer (12).

3. Strain gage according to claim 1 or 2, **characterized in that** the first layer (11) and the second layer (12) of the base material (10) are connected to one another by fusing and/or wet adhesion and/or hot lamination.

4. Strain gage according to any of claims 2 or 3, **characterized in that** the reinforcing element (15) is arranged between the first layer (11) and the second layer (12) of the base material (10).

5. Strain gage according to any of claims 1 to 4, **characterized in that** the reinforcing element (15) contains or consists of carbon fibers and/or aramid fibers and/or glass fibers.

6. Strain gage according to any of claims 1 to 5, **characterized in that** the reinforcing element (15) extends parallel to the optical waveguide.

7. Strain gage according to any of claims 1 to 6, **characterized in that** it has a length between about 2 m and about 100 m or a length between about 10 m and about 70 m and/or a width of about 5 mm to about 100 mm.

8. Strain gage according to any of claims 1 to 7, **characterized in that** it contains one or more additional fiber-optic sensors (2a, 2b) and/or that it contains 2 to 10 fiber-optic sensors (2a ,2b).

9. Strain gage according to any of claims 1 to 8, **characterized in that** the base material contains or consists of polyethylene and/or polypropylene and/or acrylonitrile-butadiene-styrene and/or polyimide.

10. Strain gage according to claim 8, or claim 9 if dependent on claim 8, **characterized in that** it contains between 20 and 120 fiber Bragg gratings (3).

11. Strain gage according to any of claims 1 to 10, **characterized in that** it also contains an adhesive layer (14), by means of which the strain gage (1) can be fixed on a mechanical component (6).

12. Mechanical component (6) having a strain gage (1) according to any of claims 1 to 11.

13. Method for producing a strain gage (1), in which at least one optical waveguide is provided with a single fiber Bragg grating (3) and subsequently the optical waveguide as well as at least one reinforcing element (15) are inserted between a first layer (11) and a second layer (12) of a base material (20), wherein the first layer (11) and the second layer (12) are subsequently laminated by heat supply while a vacuum is applied and additionally a measurement mass (4) is applied in the vicinity of the fiber Bragg grating (3) to a surface of the base material (10) such that during acceleration this mass exerts a force on the base material (10), said force deforming the fiber Bragg grating (3).

14. Method according to claim 13, **characterized in that** the laminating is carried out at a temperature between 80°C and 150°C.

15. Method according to any of claims 13 or 14, **characterized in that** at least one fiber Bragg grating (3) is produced by point-to-point exposure with laser radiation or by UV laser interference exposure in the optical waveguide.

## Revendications

1. Jauge de contrainte (1) comportant au moins un matériau porteur (10) et au moins un capteur à fibre optique (2b), comportant au moins un guide d'ondes lumineuses avec un réseau de Bragg à fibres (3) individuel,
dans laquelle
le matériau porteur (10) contient un polymère ou en est constitué,
le matériau porteur (10) contient en outre au moins un élément de renforcement (15),
**caractérisée en ce que**
il est prévu en outre une masse de mesure (4) à proximité du réseau de Bragg à fibres (3), qui est fixée sur une surface du matériau porteur (10), de sorte que celle-ci exerce une force sur le matériau porteur (10) lors d'une accélération, force qui mène à la déformation du réseau de Bragg à fibres (3).

2. Jauge de contrainte selon la revendication 1,
**caractérisée en ce que**
le matériau porteur (10) comprend au moins une première couche (11) et au moins une seconde couche (12), et le capteur à fibre optique (2) est agencé entre la première couche (11) et la seconde couche (12).

3. Jauge de contrainte selon la revendication 1 ou 2,
**caractérisée en ce que**
la première couche (11) et la seconde couche (12) du matériau porteur (10) sont reliées l'une à l'autre par fusion et/ou par collage par voie humide et/ou par laminage à chaud.

4. Jauge de contrainte selon l'une des revendications 2 ou 3,
**caractérisée en ce que**
l'élément de renforcement (15) est agencé entre la première couche (11) et la seconde couche (12) du matériau porteur (10).

5. Jauge de contrainte selon l'une des revendications 1 à 4,
**caractérisée en ce que**
l'élément de renforcement (15) contient ou est constitué de fibres de carbone et/ou de fibres d'aramide et/ou de fibres de verre.

6. Jauge de contrainte selon l'une des revendications 1 à 5,
**caractérisée en ce que**
l'élément de renforcement (15) s'étend parallèlement au guide d'ondes lumineuses.

7. Jauge de contrainte selon l'une des revendications 1 à 6,
**caractérisée en ce que**
celle-ci présente une longueur comprise entre environ 2 m et environ 100 m ou une longueur comprise entre environ 10 m et environ 70 m et/ou une largeur d'environ 5 mm à environ 100 mm.

8. Jauge de contrainte selon l'une des revendications 1 à 7,
**caractérisée en ce que**
celle-ci contient un ou plusieurs capteurs à fibre optique supplémentaires (2a, 2b), et/ou **en ce que**
celle-ci contient 2 à 10 capteurs à fibre optique (2a, 2b).

9. Jauge de contrainte selon l'une des revendications 1 à 8,
**caractérisée en ce que**
le matériau porteur contient ou est constitué de polyéthylène et/ou de polypropylène et/ou d'acrylonitrile-butadiène-styrène et/ou de polyimide.

10. Jauge de contrainte selon la revendication 8 ou selon la revendication 9 prise en dépendance de la revendication 8,
**caractérisée en ce que**
celle-ci contient entre 20 et 120 réseaux de Bragg à fibres (3).

11. Jauge de contrainte selon l'une des revendications 1 à 10,
**caractérisée en ce que**
celle-ci contient en outre une couche de colle (14) par laquelle la jauge de contrainte (1) peut être fixée sur un composant mécanique (6).

12. Composant mécanique (6) comportant une jauge de contrainte (1) selon l'une des revendications 1 à 11.

13. Procédé pour réaliser une jauge de contrainte (1),
dans lequel
au moins un guide d'ondes lumineuses est pourvu d'un réseau de Bragg à fibres (3) individuel, puis
le guide d'ondes lumineuses ainsi qu'au moins un élément de renforcement (15) sont posés entre une première couche (11) et une seconde couche (12) d'un matériau porteur (10), la première couche (11) et la seconde couche (12) étant ensuite laminées par apport de chaleur en appliquant un vide, et de plus une masse de mesure (4) est posée à proximité du réseau de Bragg à fibres (3) sur une surface du matériau porteur (10), de sorte que ladite masse exerce une force sur le matériau porteur (10) lors d'une accélération, force qui mène à la déformation du réseau de Bragg à fibres (3).

14. Procédé selon la revendication 13,
**caractérisé en ce que**
le laminage s'effectue à une température entre 80 °C et 150 °C.

15. Procédé selon l'une des revendications 13 ou 14,
**caractérisé en ce que**
au moins un réseau de Bragg à fibres (3) est généré par une exposition point à point à un rayonnement laser ou par une exposition par interférence au laser UV dans le guide d'ondes lumineuses.
